# EUROPEAN PATENT APPLICATION

(11) **EP 3 772 229 A1**
(43) Date of publication of application: **03.02.2021**
(21) Application number: 19189851.9
(22) Date of filing: 02.08.2019
(51) Int. Cl.: H04W 72/04, H04W 28/02, H04W 28/06

(54) **RADIO COMMUNICATION**

(71) Applicant: Nokia Technologies Oy, 02610 Espoo (FI)
(72) Inventor: Abreu, Renato Barbosa, 9000 Aalborg (DK); Berardinelli, Gilberto, 9000 Aalborg (DK); Kuo, Ping-Heng, BS1 5SW Bristol (NZ); Blücher Brink, Stig, 9220 Aalborg Øs (DK); Lauridsen, Mads, 9260 Gistrup (DK); Jacobsen, Thomas Haaning, 9400 Nørresundby (DK); Karimidehkordi, Ali, 9000 Aalborg (DK)
(74) Representative: Nokia EPO representatives

(57) **Abstract**

An apparatus comprising means for:
processing content having at least first parts and second parts; and
sending the second parts and at least some but not all of the first parts
using a first channel and a second channel when sending a first part and a second part; and
using only the second channel when sending a second part and not sending a first part.

## Description

### TECHNOLOGICAL FIELD

Embodiments of the present disclosure relate to radio communication.

### BACKGROUND

In radio communication systems, the radio spectrum is a scarce resource, and utilizing it efficiently is desirable. This can, for example, improve one or more of: capacity, interference, latency, power consumption

### BRIEF SUMMARY

According to various, but not necessarily all, embodiments there is provided An apparatus comprising means for:
processing content having at least first parts and second parts; and
sending the second parts and at least some but not all of the first parts:
   using a first channel and a second channel when sending a first part and a second part; and
   using only the second channel when sending a second part and not sending a first part.

In some but not necessarily all examples, the means for sending the second parts and at least some but not all of the first parts is configured to send the second part without sending the first part more frequently than sending the first part .

In some but not necessarily all examples, the apparatus comprises: means for distributing the first part and the second part across both the first channel and the second channel when sending a first part and a second part.

In some but not necessarily all examples, the apparatus comprises: means for providing the first part to the first channel not the second channel and the second part to the second channel, not the first channel, when sending a first part and a second part.

In some but not necessarily all examples, the apparatus comprises: means for discontinuous transmission of first parts wherein some but not all of the first parts are sent and the first parts that are sent with variable time periods separating adjacent ones of the sent first parts.

In some but not necessarily all examples, the apparatus is configured to prevent sending of first parts that are informationally redundant with respect to a sent first part.

In some but not necessarily all examples, the apparatus is configured to enable sending of first parts that are informationally non-redundant with respect to a sent first part.

In some but not necessarily all examples, the means for processing content is configured to process a series of messages as the content, wherein messages comprise a first part and a second part and wherein the means for sending the second parts and at least some but not all of the first parts is configured to send the first part for one or more but not all messages in the series and send the second parts for all messages in the series.

In some but not necessarily all examples, the means for sending the second parts and at least some but not all of the first parts is configured to send the first part for one message in the series.

In some but not necessarily all examples, the means for processing content is configured to process the series of messages as an ordered temporal sequence of messages.

In some but not necessarily all examples, the messages are industrial internet of things (IloT) messages.

In some but not necessarily all examples, the messages are for vehicular communication.

In some but not necessarily all examples, the means for sending the second parts and at least some but not all of the first parts is configured to use as the first channel communication resources used by a first set of one or more users and is configured to use as the second channel different communication resources used by a second set of one or more users.,

In some but not necessarily all examples, the means for sending the second parts and at least some but not all of the first parts is configured to re-send information sent in the first channel but not the second channel.

In some but not necessarily all examples, the means for sending the second parts and at least some but not all of the first parts is configured to re-send information sent in the first channel but not the second channel.

In some but not necessarily all examples, the means for processing content having at least first parts and second parts is configured to determine whether or not the first part changes over time, and is configured to disable sending of the first part if the first part has not changed and is configured to enable sending of the first part if the first part has changed.

In some but not necessarily all examples, the means for processing content having at least first parts and second parts is configured to identify first portions of the content that have a relatively low expectation of variability as the first parts and to identify second portion of the content that have a relatively high expectation of variability as the second parts.

In some but not necessarily all examples, the apparatus is configured as user equipment comprising at least a radio transmitter for sending the first and second parts. or is configured as a network node comprising at least a radio transmitter for sending the first and second parts.

According to various, but not necessarily all, embodiments there is provided a method comprising:
processing content having at least first parts and second parts; and
sending the second parts and at least some but not all of the first parts
   using a first channel and a second channel when sending a first part and a second part; and
   using only the second channel when sending a second part and not sending a first part.

According to various, but not necessarily all, embodiments there is provided a computer program that, when run on a computer, performs:
processing content having at least first parts and second parts; and
sending the second parts and at least some but not all of the first parts
   using a first channel and a second channel when sending a first part and a second part; and
   using only the second channel when sending a second part and not sending a first part.

According to various, but not necessarily all, embodiments there is provided an apparatus comprising:
at least one processor; and
at least one memory including computer program code
the at least one memory and the computer program code configured to, with the at least one processor, cause the apparatus at least to perform:
   processing content having at least first parts and second parts; and
   sending the second parts and at least some but not all of the first parts
      using a first channel and a second channel when sending a first part and a second part; and
      using only the second channel when sending a second part and not sending a first part.

In some but not necessarily all examples, there is redundancy in the first parts, so that a first part repeats over time, then the apparatus comprises means for: processing content having at least a first part and second parts; and sending, over a time period, the second parts and the first part:
using a first channel and a second channel when sending the first part and a second part; and
using only the second channel when sending only the second part.

In some but not necessarily all examples there is provided apparatus comprising means for:
processing content having at least first parts and second parts; and
sending, over a time period, the second parts and at least some but not all of the first parts:
   initially during the time period, using a first channel and a second channel when sending a first part and a second part; and
   then during the time period, using only the second channel when sending a second part and not sending a first part.

In some but not necessarily all examples, the content can be received content that is content received by the apparatus. In some but not necessarily all examples, the content can be a data structure or a series of data structures. The one or more data structure can, in some examples, be messages. The messages can, in some examples, be received by or produced by the apparatus.

In some but not necessarily all examples, the first channel and the second channel are different logical channels and also different physical channels. In this example, using a first channel and a second channel when sending the first part and a second part means using a first physical channel for sending the first part and a second different physical channel for sending the second part, and using the second channel when sending the second part and not sending a first part means using the same second physical channel (or a different physical channel) for sending only the second part.

In some but not necessarily all examples, the first channel and the second channel are different logical channels that can share a physical channel. In this example, using a first channel and a second channel when sending the first part and a second part means using one physical channel for sending the first part and the second part, and using the second channel when sending the second part and not sending a first part means using that physical channel, or another physical channel, for sending only the second part.

According to various, but not necessarily all, embodiments there is provided examples as claimed in the appended claims.

### BRIEF DESCRIPTION

Some example embodiments will now be described with reference to the accompanying drawings in which:
FIG. 1 shows an example embodiment of the subject matter described herein;
FIG. 2 shows another example embodiment of the subject matter described herein;
FIG. 3 shows another example embodiment of the subject matter described herein;
FIG. 4 shows another example embodiment of the subject matter described herein;
FIG. 5A shows another example embodiment of the subject matter described herein;
FIG. 5B shows another example embodiment of the subject matter described herein;
FIG. 6 shows another example embodiment of the subject matter described herein;
FIG. 7 shows another example embodiment of the subject matter described herein;
FIG. 8 shows another example embodiment of the subject matter described herein;
FIG. 9 shows another example embodiment of the subject matter described herein;
FIG. 10A shows another example embodiment of the subject matter described herein;
FIG. 10B shows another example embodiment of the subject matter described herein.

### DETAILED DESCRIPTION

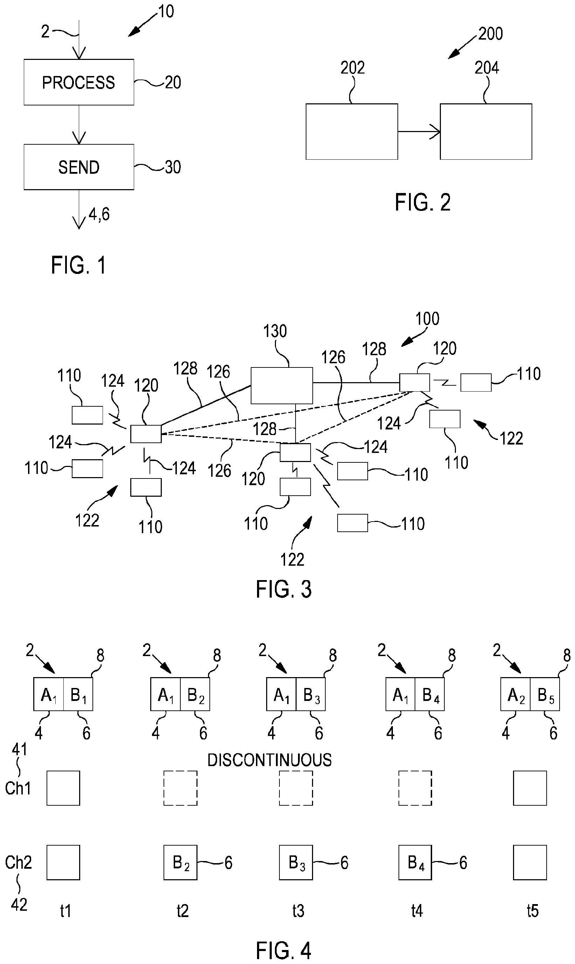

FIG 1 illustrates an example of an apparatus 10 comprising means 20, 30 for: processing content having at least first parts and second parts; and sending the second parts and at least some but not all of the first parts: using a first channel and a second channel when sending a first part and a second part; and using only the second channel when sending a second part and not sending a first part.

Processing means 20 is configured to process content. Referring to FIG 4, the content 2 comprises at least first parts 4 and second parts 6.

Transmission means 30 is configured to send the second parts 6 and at least some but not all of the first parts 4.

Referring to FIG 4, the transmission means 30 is configured to use a first channel 41 and a second channel 42 when sending a first part 4 and a second part 6. This occurs at time t1 and t5 in the example of FIG 4 but not at times t2, t3, t4. The transmission means 30 is configured to use only the second channel 42 when sending a second part 6 and not sending a first part 4. This occurs at time t2, t3, t4 in the example of FIG 4 but not at times t1 and t5.

FIG 2 illustrates an example in which the content 2 relates to real-time data, for example data produced by industrial internet of things (IloT) devices.

In this example, a system 200 comprises a transmitter device 202 for transmitting content 2 and a receiver device 204 for receiving content 2. The transmitter device 202 can, for example, be apparatus 10.

In some examples the transmitter device 202 is an uplink device that sends information to a controller. The transmitter device 202 can, for example be associated with a sensor.

In some examples the receiver device 204 is a downlink device that receives information sent from a controller. The receiver device 204 can, for example be associated with an actuator.

Many Industrial Internet of Things (IloT) applications are characterized by deterministic traffic and the payload or part of the payload does not change very often, e.g. the application address, sensor ID, and actuator ID. This kind of traffic can be present, for instance, in control loops where messages from sensors and actuators are exchanged with a controller. These messages can be formed by information that changes often []ₒ, changes sporadically {}ₛ, and fixed and not varying ()_{f} information. An illustrative example would be messages like:
Example 1: (Robot: A)_{f}, {Joint: 1}ₛ, [Angle: 45]ₒ, {Sensor: 3}ₛ, [Distance: 10]ₒ
Example 2: (Conveyor: B)_{f}, {Speed: 5}ₛ, [Weight: 22]ₒ

Some values can change frequently, while other values and identifications do not change so often. It is most likely that only the values are transmitted, but the descriptions are shown here for illustration purpose.

The transmitter 202 (or apparatus 10) can be a battery-operated apparatus but it does not transmit unnecessary power by transmitting and processing redundant data. In some examples it can be a mobile apparatus.

In some applications, the content 2 is real-time or time-sensitive. In these applications it is desirable to send content 2 without delay (latency) but without unnecessarily using the radio spectrum. The apparatus 10 can achieve this.

Fig 3 illustrates an example of a network 100 comprising a plurality of network nodes including terminal nodes 110, access nodes 120 and one or more core nodes 130. The terminal nodes 110 and access nodes 120 communicate with each other. The one or more core nodes 130 communicate with the access nodes 120.

The one or more core nodes 130 may, in some examples, communicate with each other. The one or more access nodes 120 may, in some examples, communicate with each other.

The network 100 may be a cellular network comprising a plurality of cells 122 each served by an access node 120. In this example, the interface between the terminal nodes 110 and an access node 120 defining a cell 122 is a wireless interface 124.

The access node 120 is a cellular radio transceiver. The terminal nodes 110 are cellular radio transceivers.

In the example illustrated the cellular network 100 is a third generation Partnership Project (3GPP) network in which the terminal nodes 110 are user equipment (UE) and the access nodes 120 are base stations.

In the particular example illustrated the network 100 is an Universal Terrestrial Radio Access network (UTRAN). The UTRAN consists of UTRAN NodeBs 120, providing the UTRA user plane and control plane (RRC) protocol terminations towards the UE 110. The NodeBs 120 are interconnected with each other and are also connected by means of the interface 128 to the Mobility Management Entity (MME) 130.

The term 'user equipment' is used to designate mobile equipment with or without a smart card for authentication/encryption etc such as a user identity module (UIM).

The NodeB can be any suitable base station. A base station is an access node. It can be a network element in radio access network responsible for radio transmission and reception in one or more cells to or from the user equipment.

The UTRAN can be a 3G, 4G or 5G network, for example. It can for example be a New Radio (NR) network that uses gNB as access nodes 120. New radio is the 3GPP name for 5G technology.

In some examples, the apparatus 10 can be configured as user equipment comprising at least a radio transmitter for sending the first and second parts 4, 6. The first and second channels 41, 42 are uplink channels.

In some examples, the apparatus 10 can be configured as an access node 120 comprising at least a radio transmitter for sending the first and second parts 4, 6. The first and second channels 41, 42 are downlink channels.

The 5G New Radio (NR) systems will support use cases with tight reliability and latency requirements suitable for IloT applications via Time-Sensitive Communications (TSC). This supports wireless Ethernet and controls message periodicity, message size, message arrival time at gNB (DL) and UE (UL). It will support multiple simultaneous active semi-persistent scheduling (SPS) configurations for a given BWP of a UE. It will support shorter SPS periodicities.

The NR system uses Configured Grant (CG) and Semi-persistent Scheduling (SPS) for reserving (pre-allocating) resources for deterministic/periodic traffic. Pre-allocation avoids scheduling signaling for every transmission. This provides ultra-reliable and low latency communications (URLLC). The second channel 42 can be a pre-allocated channel.

For deterministic traffic (e.g. isochronous communication), dedicated resources can be pre-allocated. If the traffic is sporadic, multiple UEs can share the same pool of resources to reduce wasting spectrum.

FIG 4 illustrates an example of how the apparatus 10 operates.

The apparatus 10 processes content 2 having at least first parts 4 and second parts 6. The apparatus 10 sends the second parts 6 and at least some but not all of the first parts 4
(i) using a first channel 41 and a second channel 42 when sending a first part 4 and a second part 6; and
(ii) using only the second channel 42 when sending a second part 6 and not sending a first part 4.

At times t1 and t5 (but not times t2, t3, t4), the apparatus 10 uses the first channel 41 and the second channel 42 when sending a first part 4 and a second part 6.

At times t2, t3, t4 (but not time t1 and t5), the apparatus 10 uses only the second channel 42 when sending a second part 6 and does not send a first part 4.

The apparatus 10, in this example, sends, over a time period (t1 to t4), the second parts 6 and at least some but not all of the first parts 4: initially (t1) during the time period (t1 to t4), it uses a first channel 41 and a second channel 42 when sending a first part 4 and a second part6; and then (t2, t3, t4) during the time period (t1-t4), it uses only the second channel 42 when sending a second part 6 and not sending a first part 4.

In this example, the apparatus 10 sends the second part without sending the first part (times t2, t3, t4) more frequently than sending the first part and the second part (time t1, t5) and sends the first part and the second part (times t1, t5) less frequently than sending the second part without sending the first part (times t2, t3, t4).

More second parts 6 are sent than first parts 4. In this example, not all the first parts 4 are sent. In this example, all the second parts 6 are sent.

In this example there are an equal number of first parts 4 and second parts 6, and only some of the first parts 4 are sent and all of the second parts 6 are sent.

The first parts 4 are sent with discontinuous transmission. In discontinuous transmission, some but not all of the first parts 4 are sent and the first parts 4 that are sent are sent with variable time periods separating adjacent ones of the sent first parts. The first parts 4 are sent as required, and are not sent periodically.

In one example, the apparatus 10 is configured to distribute the first part 4 and the second part 6 across both the first channel 41 and the second channel 42 when sending a first part 4 and a second part 6 (at time t1, t5 in this example). The content 2 can, for example, be channel coded and then sent in both the first channel 41 and the second channel 42. In this example, there is no need to distinguish first and second parts 4, 6. In this example the first channel and the second channel are different logical channels that can share a physical channel. In this example, using a first channel 41 and a second channel 42 when sending the first part 4 and a second part 6 can mean using one physical channel for sending the first part 4 and the second part 6, and using the second channel 42 when sending the second part and not sending a first part means using that physical channel, or another physical channel, for sending only the second part 6.

In one example, the apparatus 10 is configured to provide the first part 4 to the first channel 41 and the second part 6 to the second channel 42 when sending a first part 4 and a second part 6 (at time t1, t5 in this example). The first part 4 can, for example, be channel coded separately to the second part 6. In this example, there is a need to distinguish first and second parts 4, 6. In this example, the apparatus 10 sends at least some but not all of the first parts 4 via the first channel 41 and sends the second parts 6 via the second channel 42. None of the first parts 4 are sent via the second channel 42. In this example the first channel and the second channel are different logical channels and also different physical channels. In this example, using a first channel and a second channel when sending the first part 4 and a second part 6 can mean using a first physical channel 41 for sending the first part 41 and a second different physical channel 42 for sending the second part 42, and using the second channel when sending the second part and not sending a first part can mean using the same second physical channel 42 (or a different physical channel) for sending only the second part 6.

The apparatus 10 can be configured to prevent sending of first parts 4 that are informationally redundant with respect to a previously sent first part 4, such as for example, the immediately previous sent first part 4. Thus while there are no changes to the first part, the first part 4 is not sent and there is a discontinuity in transmission of the first parts 4.

The apparatus 10 can be configured to enable sending of first parts 4 that are not informationally redundant with respect to a previously sent first part 4, such as for example, the immediately previous sent first part 4. Thus when there is a change to the first part, the first part 4 is sent and there is an end to any discontinuity in transmission of the first parts 4.

The content 2 can be received content that is content received by the apparatus 10. The content 2 can be a data structure or a series of data structures. The one or more data structure can, in some examples, be messages 8. The messages 8 can, in some examples, be received by or produced by the apparatus 10.

In the example illustrated but not necessarily all examples, the content 2 is a series of messages 8. Each message 8 comprises a first part 4 and a second part 6.

In the example illustrated, the apparatus 10 sends the first part 4 for one or more but not all messages 8 in the series and sends the second parts 6 for all messages 8 in the series.

In the example illustrated, the messages 8 in the series are sent at time t1, t2, t3, t4. The apparatus 10 sends the first part 4 for one message 8 in the series, the first message 8 in the series. The apparatus 10 sends the second parts 6 for all messages 8 in the series.

The series of messages ends when the first part 4 in a message is no longer informationally redundant with respect to the first part 4 sent at the start of the series and a new series of messages 8 starts. Thus a length of the series of messages 8 is determined by content of the first part 4. The new series starts when the first part 4 is not informationally redundant with respect to the preceding series of messages 8.

The series of messages are an ordered temporal sequence of messages. The order of the messages 8 is important. It is therefore important that the messages 8 are processed and the relevant parts 4, 6 sent in time order.

The series of messages can for example comprise time sensitive information, isochronous information, deterministic traffic, or information that has tight reliability and latency demands.

The series of messages 8 can, for example be industrial internet of things (IloT) messages.
In some example, the second channel 42 is pre-allocated using network signaling.

In some examples, the first channel 41 is pre-allocated using network signaling. In other examples, the first channel 41 is allocated on demand, ad-hoc, using network signaling

In some but not necessarily all examples, the first channel has a higher resource utilization that the second channel. A higher resource allocation can arise from having a few users with high communication resources demands or many users with lower communication resource demands
In some but not necessarily all examples, the first channel comprises communication resources used by a first set of one or more users and the second channel comprises communication resources used by a second set of one or more users.

In one example, the second set comprises less users that the first set.
For example, the second set can include only the user of the apparatus 10, so that the second channel 42 is a dedicated channel that is not shared.

For example, the first set can include multiple users including the user of the apparatus 10, so that the first channel 41 is a shared channel.

In some but not necessarily all examples, instead of sending a part 4, 6 the apparatus 10 sends information about a change in the part 4, 6 relative to a previously sent part 4,6. Thus fields including, for example, information about a source and a destination of transmissions, don't necessarily change in a stable link. The redundant information (first part 4) is transmitted only in the first packets to establish a context. The next packets convey variable information (second parts 6), and sequence numbers. While the context is established and stable, the second parts 6 of the messages 8 are transmitted as much compressed as possible to improve the efficiency of the link. If failures occur, then uncompressed first and second parts 4, 6 of the message are sent to reconstruct the context.

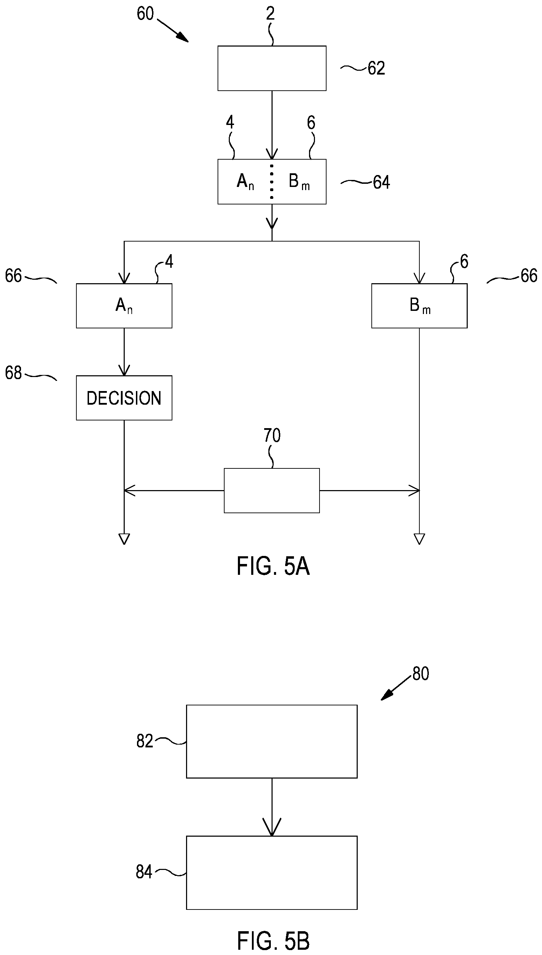

FIG 5A illustrates a method 60 for sending the second parts and at least some but not all of the first parts. It uses a first channel 41 and a second channel 42 when sending a first part 4 and a second part 6. It uses only the second channel 42 when sending a second part 6 and not sending a first part 4.

At block 62, content 2 is received. The content 2 has at least first parts 4 and second parts 6 although these have not yet been identified as such.

At block 62, the method 60 comprises processing content 2 having at least first parts 4 and second parts 6. The method 60 identifies a portion of the content 2 that has a relatively low expectation of variability as the first part 4 and identifies a portion of the content 2 that has a relatively high expectation of variability as the second part 6.

Variability is information entropy change over time. It can, for example be measured as a frequency of change of the first part 4.

The variability of a portion of the content 2 can for example be measured as the percentage of that portion of the content 2 that does (or does not) vary during a period of time. The boundary between first and second parts can be determined as a boundary between fixed/sporadically varying content and between often changing content.

The content 2 can be continuously received and processed at blocks 62, 64.

At block 66, the content 2 is separated into at least first parts 4 and second parts 6.

At block 68, the method 60 determines whether or not the first part 4 changes over time.

At block 68, the method 60enables sending of first parts 4 that are informationally non-redundant with respect to a sent first part 4. It disables sending of first parts 4 that are informationally redundant with respect to a sent first part 4. The sent first part 4 can be the immediately previous sent first part 4. Thus the first part can be sent if it has changed and not sent if it has not changed.

The first and second parts 4, 6 are allocated to channels 41, 42 based on variability e.g. information entropy change over time. The part with lower variability, the first part 4, is allocated to use (in whole or in part) a channel with lower capacity available, for example shared first channel 41. The part with higher variability, the second part 6, is allocated to use the channel with higher capacity available, for example dedicated second channel 42.

Thus the method 60 enables sending the second parts 6 and at least some but not all of the first parts 4 using a first channel 41 and a second channel 42 when sending a first part 4 and a second part 6; and using only the second channel 42 when sending a second part 6 and not sending a first part 4.

Optionally, at block 70, information can be added to the first part 4 and/or the second part 6.

For example, information can be added to assist collision handling. In some but not all examples, the apparatus 10 is configured to re-send information, such as for example a first part 4, sent in the first channel 41. For example, HARQ may be implemented in the first channel 41 but not the second channel 42. For example, a flag transmitted in the second channel 42 can be used to identify that there is also a transmission in the first channel 41.

For example, information can be added to facilitate concatenation of parts 4, 6 at reception. The information can, for example, improve data integrity or enable correct ordering. For example, a cyclic redundancy check may be used in either or both channels 41, 42.

FIG 5B illustrates a method 80 of assembling the first parts 4 and second parts 6 to produce the content 2.

At block 82, when a first part 4 of content 2 is received it is stored in a memory updating the currently stored first part.

At block 84, when a second part 6 of content 2 is received it is combined with the currently stored first part 4.

It some examples, each second part 6 of content 2 is combined with the currently stored first part 4.

It some examples, the received second parts 6 of content 2 and the currently stored first part 4 of content 2 are combined in a specified manner.

The manner of combination of the first and second parts 4, 6 can be fixed and invariant.

The manner of combination of the first and second parts 4, 6 can be variable.

The manner of combination of the first and second parts 4, 6 can be determined by communication from the transmitter to the receiver, from the receiver to the transmitter or between the transmitter and the receiver.

The manner of combination of the first and second parts 4, 6 can be determined by communication from the core network to user equipment.

In some examples, a map may be defined that defines how received first and second parts 4, 6 are combined.

In some but not necessarily all examples, the second channel 42 is pre-allocated using network signaling. In some but not necessarily all examples, the first channel 41 is pre-allocated using network signaling or is allocated on demand using network signaling.

In some but not necessarily all examples, allocation of the first and/or second channels 41, 42 is reconfigured using network signaling. This can, for example, occur when it is desirable to re-allocate resources committed to the first part 4 or the second part 6.

Resource allocation can be based on message content 2 variability. There is a pool of resources (second channel 42) for transmitting highly varying segments of the information (second part 6), and another pool of resources (first channel 41) to be additionally used, only when sporadically varying segments of the information (first parts 2) are also changing.

There can be signaling between transmitter and receiver indicating message variability and/or signaling "message to resource" mapping.

Better resource utilization is achieved, since dedicated resources are not reserved for semi-static information (first part 4) transmission. There is higher network capacity for IloT applications and, at the same time, also improved power consumption and battery usage at the transmitter.

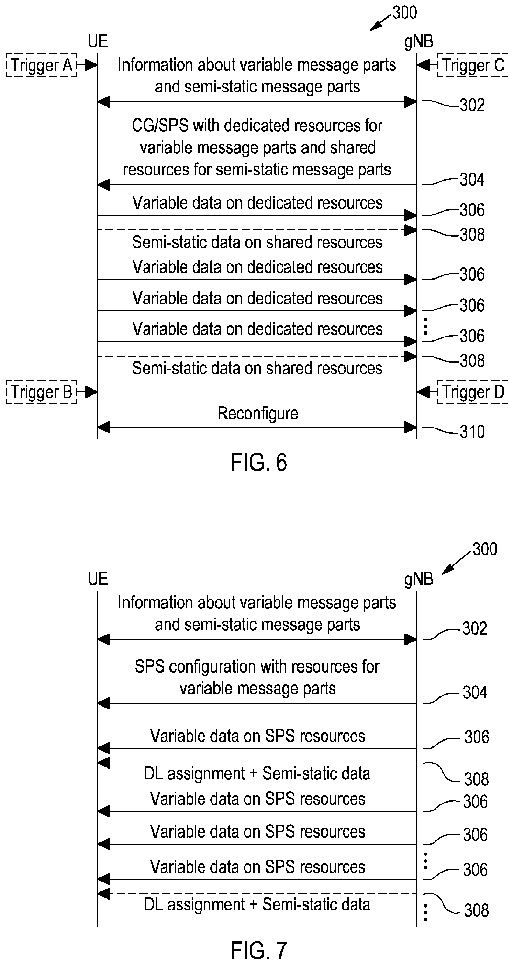

FIG 6 illustrates an example of signaling between transmitter of content and receiver of content. In this example, user equipment (UE) is the transmitter of content in uplink channels and the access node is the receiver of content via the uplink channels. However, in other example, the transmission of content can be in downlink channels from an access node to UE.

At stage 302, a flow monitoring module in the apparatus 10 recognizes semi-static and variable segments of the data flow (content 2). A trigger is activated when X% of the data segment does not vary during a window of T₁ seconds.

In one implementation, the flow monitoring module is in the UE. The UE is the apparatus 10. The trigger, called Trigger A, is implemented in a PDCP layer in the UE side (before encryption). The data segments 4, 6 of the messages 8 are monitored and labeled according to the variability, position and size. This implementation gives more autonomy and flexibility for the UE behavior in detecting the message variability. The information acquired is exchanged between the UE and the gNB, possibly during the PDU session establishment or RRC SPS/CG configuration which exists in 5G NR systems. The UE informs to the gNB the message periodicity, size, arrival time, and also the position and size of message segments (or start and end position of the segments), and their variability class (e.g. static or variable).

In another implementation, the flow monitoring module is in the access node gNB. The gNB is the apparatus 10. The trigger, called Trigger C, is implemented in a PDCP layer of the gNB (after the decryption). Here also, the data segments 4,6 of the messages 8 are monitored and labeled according to the variability, order and size. This implementation gives more control for the gNB. The information acquired is exchanged between the UE and the gNB, possibly during the PDU session establishment or RRC SPS/CG configuration which exists in 5G NR systems.
The gNB informs the UE, at least the information about the position and size of message segments (or start and end position of the segments), and their variability class.

At stage 304, the gNB configures the UE, possibly using RRC signaling as in CG and in SPS, with sets of resources for transmission of the deterministic traffic flow. In this configuration, the gNB informs the UE the part of the resources (the second channel 42) which should be used for transmitting the message segments with high variability (second parts 6). This part of resources should be most likely dedicated to that UE, to avoid misdetection in case of collision. The gNB also informs the UE, the part of the resources (first channel 41) which are additionally used when the semi-static message segments (first parts 4) change. This part of resources can be shared by multiple UEs, to avoid resource wasting when no semi-static information is transmitted. As previously mentioned, the semi-static information (first part 4) is only transmitted when it changes, and as indicated in FIG 4 multiple "variable data" packets (second parts 6) may be sent before such a semi-static information change occurs.

At stage 306, the UE follows the gNB configuration. Upon a packet arrival from application layer, the UE will utilize the configuration to associate variable (second parts 6) and semi-static segments (first parts 4) to the resources (channel 41, 42). The UE then transmits the variable segments (second parts 6) in one pool of resources (second channel 42), which can be dedicated to that UE. And when the semi-static segments (first parts 4) change, an extra pool of resources (first channel 41), which can be shared resources, are utilized. The transmitted segments (parts 4, 6) are accompanied by a header which identify them.

In one embodiment the headers are sequential. The receiver, reassembles the variable data (second parts 6) that has certain headers with the previously received semi-static data (first parts 4) that has different headers.

In another embodiment, the initial configuration specifies a mapping of data segments (parts 4, 6) to resources (channels 41, 42), to avoid the transmission of sequential headers.

The transmission in the physical layer, at stage 306, 308 can have different implementations

In one implementation, the semi-static segments (first parts 4), when transmitted, are encoded separately from the variable segments (second parts 6), and each of them is transmitted in their associated resources. The first part 4 is transmitted 308 in the first channel 41. The second parts 6 are transmitted 306 in the second channel 42. In this case, each part 4, 6 can be decoded, feedbacked and possibly retransmitted separately.

In another implementation, the semi-static segments (first parts 4), when transmitted 308, are jointly encoded together with the variable segments (second parts 6), and are spread over the shared resources (first channel 41) and dedicated resources (second channel 42). In this case, the advantage is the use of larger code blocks which have more efficient coding.

In case the pool of resources for conveying the semi-static segments (first parts 4) is shared, the transmissions 308 in this pool may be subject to collisions with other UEs transmissions. Existing HARQ and repetitions schemes can be employed to ensure a reliable reception. In addition, a data integrity checking method can be applied for ensuring that the reassembled payload is correct. One embodiment could employ a CRC check, where the CRC (transmitted in dedicated resources - second channel 42) is used to validate the semi-static and varying data segments (parts 4, 6). This ensures the integrity of the whole payload, with the cost of more overhead.

In another embodiment, a flag transmitted in the header together with the varying data (second part 6) in the second channel 42 can indicate that the semi-static data (first part 4) has changed. This can ensure that the gNB provides a retransmission opportunity for the varying data segments (first part 4) in case it totally misses the transmission in the shared resources (first channel 41). The flag can be one bit sent in dedicated resources (second channel 42)

The gNB, after receiving the information segments (parts 4, 6) from the lower layers, reassembles the PDCP payload 8. The semi-static segments (first parts 4) are stored in a local buffer, since they will be reused until the semi-static segments (first parts 4) have a change.

After the transmission 308 of the semi-static segments (first part 4) to the gNB, the UE does not transmit them anymore, until the moment that the segments (first part 4) change. The varying segments (second parts 6) can be solely transmitted 306 in their associated resources (second channel 42) together with its headers. The gNB should receive these segments (second parts 6) and reassemble with the previously received semi-static segment(s) (first part(s) 4) in the PDCP layer, before forwarding the payload 2 to the higher layers.

The flow monitoring module can continually monitor the variability of the segments (parts 4, 6) of the traffic flow (content 2). In case of a significant change, the resource configuration becomes inadequate and reconfiguration 310 occurs. A trigger for reconfiguration 310 is activated in case Y% of the packets has varied within a window of T₂ seconds. In one implementation, the trigger, called Trigger B, is implemented in the UE side, for monitoring the packet variability coming through the PDCP layer. Another implementation can include another trigger, called Trigger D, implemented in the gNB side. The gNB can possibly monitor the usage of the shared resources and, in case it is being used by a certain UE in more than Z% of the occasions, the trigger is activated. Upon a trigger activation a reconfiguration 310 is initiated.

The definitions of variability trigger levels (X,Y,Z) and monitoring windows (T₁ and T₂) may be standardized.

FIG 7 illustrates the method 300 in alternative form.

In this example, gNB can configure a pool of resources (second channel 42) for variable segments of data (second parts 6), while it dynamically assigns the pool of resources (first channel 41) for transmitting 308 semi-static segments of data (first parts 4). Such an implementation is likely to be especially relevant for the downlink, but it can also be applied in uplink using a dynamic grant for less varying data segments (first parts 4), if the latency constraint allows for the delay of a dynamic grant handshake.

The dynamic allocation can just allocate the first channel 41 on demand for conveying the first part 4 whenever the content of the first part 4 changes, while the second part 6 is conveyed in the second channel 42 (which can be semi-persistent scheduled).

Alternatively, the dynamically assigned pool of resources can be a larger physical channel (that logically includes the first channel 41 and the second channel 42) for conveying both, first and second parts 4, 6 (which can be jointly encoded). In this example, the dynamic allocation can overwrite the allocation of a logical second channel 42 to a physical second channel 42 in that time instant.

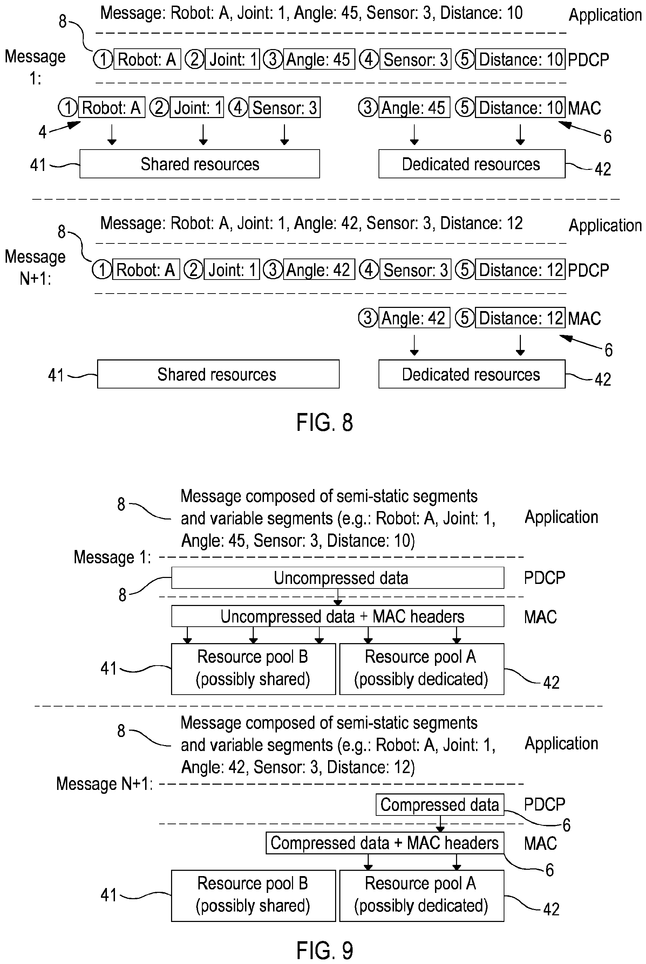

FIGs 8 and 9 illustrate examples of identification of variable/non-variable segments of information (parts 4, 6 of content 2) in a deterministic traffic flow and different resource allocation for conveying the respective segments (parts 4, 6).

There is assignment of multiple pools of resources that are used depending on the variability of the information. For instance, a pool of dedicated resources (second channel 42) for transmission of variable segments (second parts 6) of the information and a pool of resources (first channel 41), which can be shared by multiple UEs, for transmission of sporadically changing segments (first parts 4) of information.

Message parts 6 that change often are transmitted in dedicated resources 42, while message parts 4 that change sporadically are transmitted only when a change occurs, and for that, shared resources 41 are used. The first part 4 of the message 8, is only transmitted in message 1 and not in the later N+1 message, because the message content has not changed.

In the example of Fig 8, the apparatus 10 is configured to provide the first part 4 to the first channel 41 and the second part 6 to the second channel 42 when sending a first part 4 and a second part 6 (at time t1, for message 1). The first part 4 can, for example, be channel coded separately to the second part 6. In this example, the apparatus 10 sends the first part 4 via the first channel 41 (message 1) and sends the second parts 6 via the second channel 42 (message 1, message N+1). The first part 4 is not sent via the second channel 42.

In the example of Fig 9, the apparatus 10 is configured to distribute the first part 4 and the second part 6 across both the first channel 41 and the second channel 42 when sending a first part 4 and a second part 6 (at time t1, for message 1). The content 2 can, for example, be channel coded and then sent in both the first channel 41 and the second channel 42. In this example, there is no need to distinguish first and second parts 4, 6. In this example, the apparatus 10 sends the first part 4 via the channels 41, 42 (message 1) and sends the second parts 6 (with the first part 4) via the channels 41,42 (message 1) and sends the second parts 6 (without the first part 4) via the channel 42 (message N+1).

In the example of FIG 9, instead of sending a part 6 (without the first parts 4) via the channel 42 (message N+1), the apparatus 10 sends information about a change in the part 6 relative to a previously sent part 4,6. While the context is established and stable, the second parts 6 of the messages 8 are transmitted (without the first parts 4) via the channel 42 (message N+1) as much compressed as possible to improve the efficiency of the link. If failures occur, then uncompressed first and second parts 4, 6 of the message are sent to reconstruct the context (message 1). The size of compressed and uncompressed data is utilized for the negotiation of resources.

Then, one pool of resources 42 (e.g. dedicated resources to the UE) is utilized for transmission of compressed data (second parts 6). Then, another pool of resources 41 (which can be shared resources by multiple UEs) is just used (with the resources 42) when uncompressed data is transmitted (message 1). Note that the compressed and uncompressed data can be encrypted information.

In FIG 8, the apparatus 10 provides the first part 4 to the first channel 41 not the second channel 42 and the second part 6 to the second channel 42, not the first channel 41, when sending a first part 4 and a second part 6 (message 1).

In FIG 9, the apparatus 10 distributes the first part 4 and the second part 6 across both the first channel 41 and the second channel 42, when sending a first part 4 and a second part 6 (message 1).

Note that message segmentation (identification of parts 4, 6) and the association of resources 41, 42 can be conducted in many other different ways in NR, with enhancements in different protocol layers. Some options are described below:
Upper Layer Differentiation: In this option, the flow monitoring module could be implemented at SDAP layer, which identifies if a packet 8 of each QoS flow within a PDU session comprises segments 4, 6 with different variability levels. If so, the SDAP may further segment the packet 8 based on the variability, and map these segments 4, 6 to different data radio bearers (DRBs) 41, 42 even if they belong to the same message 8 (and hence the same QFI). As different DRBs 41, 42 correspond to different logical channels (LCHs) in MAC, radio mapping of which could be restricted based on configuration (i.e. LCH mapping restriction introduced in Rel-15). One may, for example, simply restrict highly variable message segments 6 to CGs or SPS with shorter periodicities (second channel 42), while relying on dynamic grants/DL assignments or on a share pool of resources (first channel 41) only for the less variable message segments 4. The segmentation rule can be negotiated between gNB and UE, so the receiver can rebuild the message properly on the upper layer.

Alternatively, enhancement could be introduced in the core network entities (e.g. UPF, AMF, SMF), to conduct message segmentation and respective QFI assignment based on variability in the 5G core. Hence, impacts to SDAP specifications can be minimized.

For uplink, the UE may perform mapping between segments 4, 6 with different variability levels and QoS flows in NAS, based on QoS rules (developed with considerations of variability levels) provided by the 5G core network.

Multiple PDCP PDUs: In this option, it is assumed that more than one RLC entities has been configured for a DRB (in Rel-15, two RLC entities can be configured, and it may be increased to four RLC entities in Rel-16). The flow monitoring module mentioned previously is kept at PDCP layer. The PDCP may encrypt and generate multiple PDCP PDUs 8 corresponding to a plurality of message segments 4, 6 with different variability levels. Then, these PDCP PDUs 8 are submitted to different RLC entities (and hence logical channels in MAC) associating to the same DRB, where mapping restriction between LCHs and radio resources 41, 42 can be applied, to achieve suitable resource allocation among different segments 4, 6 of a message 8.

### Abbreviations used:

- AMF: Access and Mobility Management Function
- CG: Configured Grant
- CRC: Cyclic Redundancy Check
- DL: Downlink
- DRB: Data Radio Bearer
- gNB: Base station in 5G New Radio
- IloT: Industrial loT
- loT: Internet of Things
- HARQ: Hybrid Automatic Repeat Request
- LCH: Logical Channels
- MAC: Media Access Control
- NAS: Non-Access Stratum
- NR: New Radio (5G radio interface)
- PDCP: Packet Data Convergence Protocol
- PDU: Packet Data Unit
- QFI: QoS Flow Identifier
- QoS: Quality of Service
- RB: Resource Block
- RLC: Radio Link Control
- ROHC: Robust Header Compression
- RRC: Radio Resource Control
- SDAP: Service Data Adaptation Protocol
- SMF: Session Management Function
- SPS: Semi-Persistent Scheduling
- TSN: Time-sensitive Networks
- TSC: Time-sensitive Communications
- UE: User equipment (device)
- UL: Uplink
- UPF: User Plane Function
- URLLC: Ultra-reliable low latency communication

In at least some examples, the apparatus 10 comprises means for signalling to inform or be informed concerning allocation of channels 41, 42 and/or mapping of parts 4, 6 to channels 41, 42. There can, for example, be signalling between UE and network.

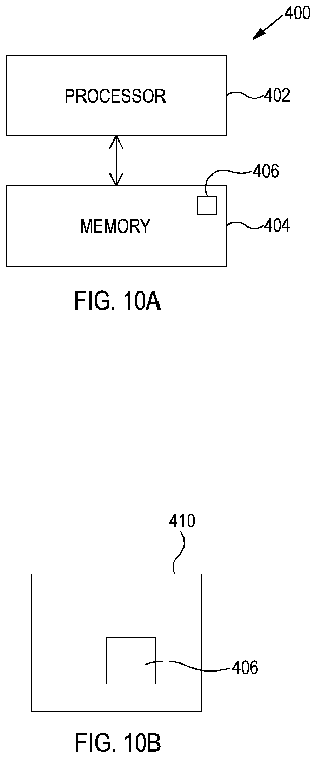

Fig 10A illustrates an example of a controller 400. Implementation of a controller 400 may be as controller circuitry. The controller 400 may be implemented in hardware alone, have certain aspects in software including firmware alone or can be a combination of hardware and software (including firmware).

As illustrated in Fig 10A the controller 400 may be implemented using instructions that enable hardware functionality, for example, by using executable instructions of a computer program 406 in a general-purpose or special-purpose processor 402 that may be stored on a computer readable storage medium (disk, memory etc) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores a computer program 406 comprising computer program instructions (computer program code) that controls the operation of the apparatus 10 when loaded into the processor 402. The computer program instructions, of the computer program 406, provide the logic and routines that enables the apparatus to perform the methods illustrated in Figs 1 to 9. The processor 402 by reading the memory 404 is able to load and execute the computer program 406.

The apparatus 10 therefore comprises:
at least one processor 402; and
at least one memory 404 including computer program code
the at least one memory 404 and the computer program code configured to, with the at least one processor 402, cause the apparatus 10 at least to perform:
   processing content having at least first parts and second parts; and
   sending the second parts and at least some but not all of the first parts
      using a first channel and a second channel when sending a first part and a second part; and
      using only the second channel when sending a second part and not sending a first part.

As illustrated in Fig 10B, the computer program 406 may arrive at the apparatus 10 via any suitable delivery mechanism 410. The delivery mechanism 410 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

Computer program instructions for causing an apparatus to perform at least the following or for performing at least the following:
processing content having at least first parts and second parts; and
sending the second parts and at least some but not all of the first parts
   using a first channel and a second channel when sending a first part and a second part; and
   using only the second channel when sending a second part and not sending a first part.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

The blocks illustrated in the Figs 1 to 9 may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

In some applications the messages are configured for providing data to a vehicle or from a vehicle. In some applications a message comprises sensor data. In some applications a message is configured for controlling an autonomous vehicle or assisting user control of a vehicle.

Where a structural feature has been described, it may be replaced by means for performing one or more of the functions of the structural feature whether that function or those functions are explicitly or implicitly described.

The above described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.
The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although embodiments have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain embodiments, those features may also be present in other embodiments whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. An apparatus comprising means for:
processing content having at least first parts and second parts; and
sending the second parts and at least some but not all of the first parts:
using a first channel and a second channel when sending a first part and a second part; and
using only the second channel when sending a second part and not sending a first part.

2. An apparatus as claimed in claim 1, wherein the means for sending the second parts and at least some but not all of the first parts is configured to send the second part without sending the first part more frequently than sending the first part.

3. An apparatus as claimed in any preceding claim comprising: means for distributing the first part and the second part across both the first channel and the second channel when sending a first part and a second part.

4. An apparatus as claimed in claim 1 or 2 comprising: means for providing the first part to the first channel not the second channel and the second part to the second channel, not the first channel, when sending a first part and a second part.

5. An apparatus as claimed in any preceding claim comprising means for discontinuous transmission of first parts wherein some but not all of the first parts are sent and the first parts that are sent with variable time periods separating adjacent ones of the sent first parts.

6. An apparatus as claimed in any preceding claim configured to prevent sending of first parts that are informationally redundant with respect to a sent first part.

7. An apparatus as claimed in any preceding claim configured to enable sending of first parts that are informationally non-redundant with respect to a sent first part.

8. An apparatus as claimed in any preceding claim, wherein the means for processing content is configured to process a series of messages as the content, wherein messages comprise a first part and a second part and wherein the means for sending the second parts and at least some but not all of the first parts is configured to send the first part for one or more but not all messages in the series and send the second parts for all messages in the series.

9. An apparatus as claimed in claim 8, wherein the means for sending the second parts and at least some but not all of the first parts is configured to send the first part for one message in the series and/or wherein the means for processing content is configured to process the series of messages as an ordered temporal sequence of messages and/or wherein the messages are industrial internet of things (IloT) messages or messages for vehicular communication. wherein the means for sending the second parts and at least some but not all of the first parts is configured to re-send information sent in the first channel but not the second channel.

10. An apparatus as claimed in any preceding claim, wherein the means for processing content having at least first parts and second parts is configured to determine whether or not the first part changes over time, and is configured to disable sending of the first part if the first part has not changed and is configured to enable sending of the first part if the first part has changed and/or wherein the means for processing content having at least first parts and second parts is configured to identify first portions of the content that have a relatively low expectation of variability as the first parts and to identify second portion of the content that have a relatively high expectation of variability as the second parts.

11. An apparatus as claimed in any preceding claim, configured as user equipment comprising at least a radio transmitter for sending the first and second parts. or is configured as a network node comprising at least a radio transmitter for sending the first and second parts.

12. A method comprising:
processing content having at least first parts and second parts; and
sending the second parts and at least some but not all of the first parts
using a first channel and a second channel when sending a first part and a second part; and
using only the second channel when sending a second part and not sending a first part.

13. A computer program that, when run on a computer, performs:
processing content having at least first parts and second parts; and
sending the second parts and at least some but not all of the first parts
using a first channel and a second channel when sending a first part and a second part; and
using only the second channel when sending a second part and not sending a first part.

14. An apparatus comprising:
at least one processor; and
at least one memory including computer program code
the at least one memory and the computer program code configured to, with the at least one processor, cause the apparatus at least to perform:
processing content having at least first parts and second parts; and
sending the second parts and at least some but not all of the first parts
using a first channel and a second channel when sending a first part and a second part; and
using only the second channel when sending a second part and not sending a first part.
